Europäisches Patentamt

European Patent Office

Office européen des brevets

(19)

(11) **EP 0 990 495 B1**

(12) **FASCICULE DE BREVET EUROPEEN**

(45) Date de publication et mention
de la délivrance du brevet:
**15.10.2003 Bulletin 2003/42**

(51) Int Cl.⁷: **B28B 11/18**

(21) Numéro de dépôt: **99402188.9**

(22) Date de dépôt: **03.09.1999**

(54) **Procédé d'ébavurage et dispositif et robot pour la mise en oeuvre de ce procédé**

Verfahren zum Entgräten und Vorrichtung mit einem Roboter zur Durchführung des Verfahrens

Deburring method and device with a robot for carrying out the process

(84) Etats contractants désignés:
**DE GB IT**

(30) Priorité: **16.09.1998 FR 9811578**

(43) Date de publication de la demande:
**05.04.2000 Bulletin 2000/14**

(73) Titulaire: **Elmeceram**
**87150 Oradour/Vayres (FR)**

(72) Inventeur: **Ronger, Jacques Laurent André**
**87800 Burgnac (FR)**

(74) Mandataire: **Moncheny, Michel et al**
**c/o Cabinet Lavoix**
**2 Place d'Estienne d'Orves**
**75441 Paris Cedex 09 (FR)**

(56) Documents cités:
**DE-A- 2 610 029       DE-A- 4 445 592**
**GB-A- 634 628         US-A- 2 309 726**
**US-A- 4 314 426**

• **PATENT ABSTRACTS OF JAPAN vol. 017, no. 217 (M-1403), 28 avril 1993 (1993-04-28) & JP 04 354670 A (HITACHI LTD), 9 décembre 1992 (1992-12-09)**

• **PATENT ABSTRACTS OF JAPAN vol. 098, no. 013, 30 novembre 1998 (1998-11-30) & JP 10 217083 A (FOR NAIN:KK), 18 août 1998 (1998-08-18)**

• **SCHRAMM L: "DEBURRING WITH INDUSTRIAL ROBOTS" INDUSTRIAL AND PRODUCTION ENGINEERING, vol. 15, no. 2, 1 mai 1991 (1991-05-01), pages 24-27, XP000288690**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un procédé d'ébavurage ainsi qu'un dispositif et un robot pour la mise en oeuvre de ce procédé.

On connaît déjà dans l'état de la technique un procédé d'ébavurage d'un objet moulé en matière organique ou minérale non métallique, l'objet comprenant au moins une ligne de bavure résultant de son moulage.

FR-A-2 706 803 (FR-93 08 023) décrit un procédé de ce type pour la fabrication d'une tasse en céramique munie d'une anse de préhension. L'ébavurage de la tasse est réalisé en frottant un organe en mousse sur la ligne de bavure.

Ce procédé a pour inconvénient de provoquer un aplanissage ou un polissage indésirable du galbe de la surface de la tasse en contact avec l'organe d'ébavurage. Ce défaut est visible dans certains cas, après l'émaillage de la tasse, sous l'aspect d'une bande relativement large s'étendant dans la zone d'ébavurage.

Le procédé décrit dans le document ci-dessus a également pour inconvénient d'arrondir de façon indésirable les angles de raccordement de l'anse avec le reste de la tasse, l'accès de l'organe d'ébavurage à l'intérieur de l'anse étant par ailleurs difficile.

US 2 309 726 décrit une machine comportant un bras pivotant à l'extrémité duquel est montée une lame destinée à découper un surplus de matière présent sur une poignée en matériau céramique. Cette machine est agencée de manière à ce que la lame, lors d'un premier parcours, réalise d'abord une découpe grossière puis, lors d'un second parcours, réalise une découpe précise.

DE 44 45592 décrit un outil d'ébavurage comportant un fil entraîné en rotation destiné à être appliqué contre la pièce à ébavurer. Ce fil est maintenu de façon lâche entre des poulies pour pouvoir se déformer.

L'invention a pour but de proposer un procédé d'ébavurage d'objets, notamment en céramique, performant, remédiant aux inconvénients ci-dessus et simple à mettre en oeuvre.

A cet effet, l'invention a pour objet un procédé conforme à la revendication 1.

Suivant d'autres caractéristiques de ce procédé :

- la ligne de bavure s'étend dans un plan, notamment un plan de symétrie de l'objet;
- l'objet est muni d'une anse de préhension et comporte deux lignes de bavures s'étendant dans un même plan, le long des surfaces extérieure et intérieure de l'anse ;
- l'objet étant en céramique, au moment du raclage de la ligne de bavure, l'objet présente une humidité par rapport au poids sec comprise entre 14 et 18%.

L'invention a également pour objet un outil d'ébavurage pour la mise en oeuvre du procédé défini ci-dessus, caractérisé en ce qu'il comprend une embase portant au moins un archer sur lequel est tendu le fil d'ébavurage, ledit fil constituant un fil métallique rectiligne, lisse et tendu, ce fil étant dépourvu de moyens abrasifs ou tranchants.

Suivant d'autres caractéristiques de cet outil :

- l'embase porte deux archers sur lesquels sont tendus des fils d'ébavurage respectifs, ces archers étant adaptés pour le raclage des lignes de bavures extérieure et intérieure respectivement, l'embase étant montée rotative sur un support afin de pouvoir présenter sélectivement le fil de l'un ou l'autre des archers au contact de la ligne de bavure correspondante ;
- l'embase est reliée au support par un vérin rotatif, par exemple du type à air comprimé.

L'invention a encore pour objet un robot du type comprenant un poignet rotatif portant un outil tel que défini précédemment.

Suivant une autre caractéristique de ce robot, lorsque l'archer est, en position de raclage de la ligne de bavure, le fil porté par cet archer est sensiblement aligné avec l'axe de rotation du poignet.

L'invention sera mieux comprise à la lecture de la description qui va suivre donnée uniquement à titre d'exemple et faite en se référant aux dessins annexés dans lesquels:

- la figure 1 est une vue d'un robot muni d'un outil selon l'invention, cet outil étant montré agrandi par rapport au reste du robot par effet de loupe, le fil d'ébavurage d'un premier archer de l'outil étant en contact avec une tasse à ébavurer ;
- la figure 2 est une vue similaire à la figure 1, dans laquelle le fil d'ébavurage d'un second archer de l'outil est en contact avec la tasse, cette figure montrant l'anse de la tasse en coupe transversale.

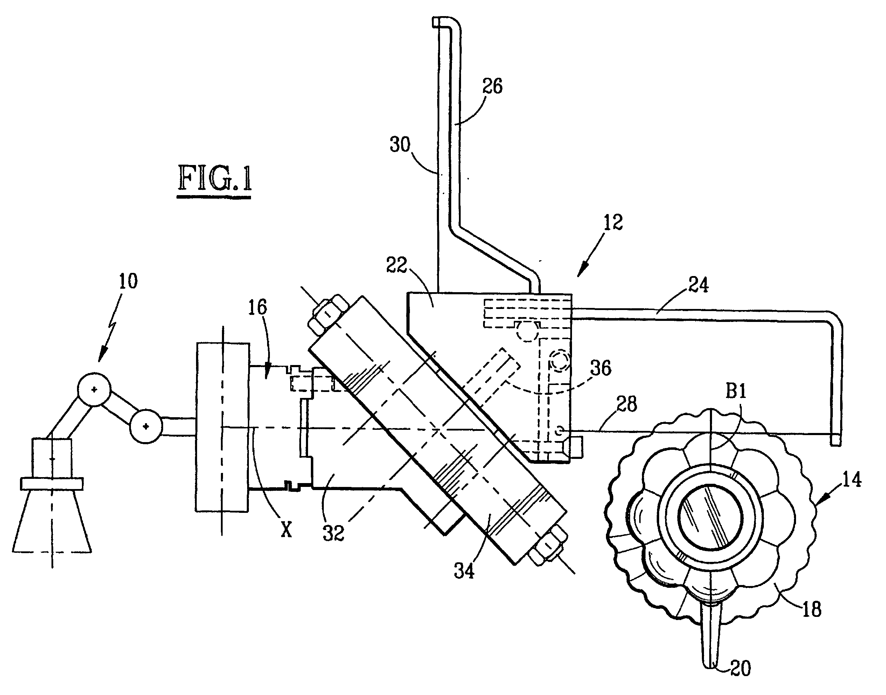

On a représenté sur la figure 1 un robot 10 portant un outil 12 selon l'invention pour l'ébavurage d'une tasse en céramique 14.

L'outil 12 est porté par un poignet rotatif 16 du robot 10. Ce poignet 16 tourne autour d'un axe X du robot.

La tasse 14 comporte un corps creux 18, de révolution, auquel est reliée une anse de préhension 20.

La tasse 14 est fabriquée par moulage, de préférence selon le procédé décrit dans FR-A-2 706 803 (FR-93 08 023).

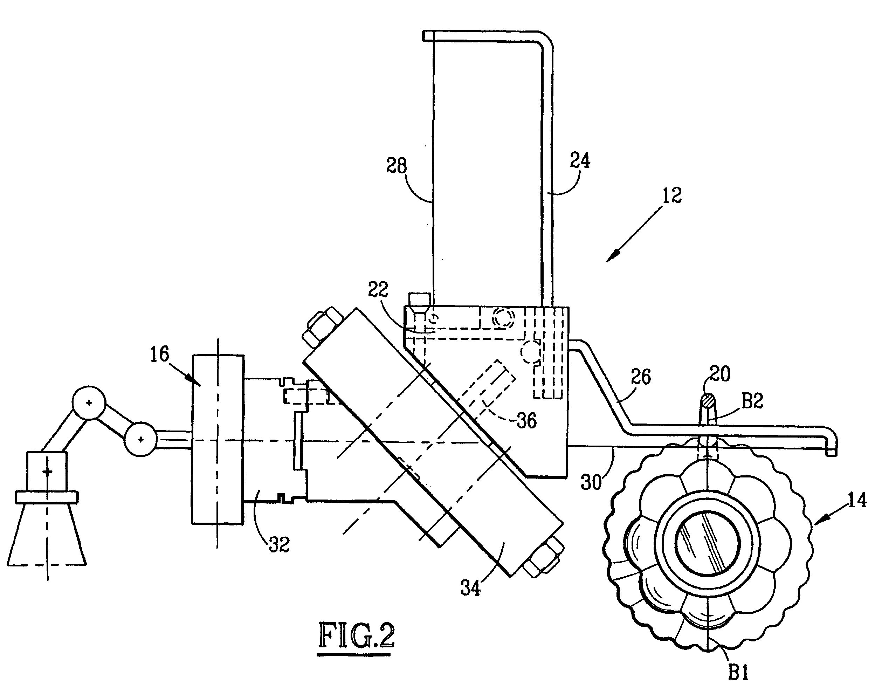

La tasse 14 comporte, après retrait du moule de fabrication, des lignes de bavures s'étendant dans un même plan, à savoir, dans l'exemple décrit, le plan de symétrie de la tasse. Une première ligne de bavure B1, visible sur la figure 1, s'étend sur la surface extérieure du corps 18 et de l'anse 20. Une seconde ligne de bavure B2, visible sur la figure 2, s'étend sur la surface intérieure de l'anse 20 et sur la surface extérieure du corps 18 prolongeant la surface intérieure de cette anse 20.

L'outil 12 comprend une embase 22 portant deux archers 24,26 sur chacun desquels est tendu un fil métallique rectiligne 28,30. Les fils métalliques 28,30 sont classiques, par exemple du type corde à piano comportant du carbure de tungstène. Les fils 28,30 sont lisses, c'est-à-dire notamment dépourvus de moyens abrasifs ou tranchants.

Chaque archer 24,26 a une forme adaptée pour racler, les lignes de bavures respectivement extérieure B1 et intérieure B2 à l'anse 20.

L'embase 22 est montée rotative sur un support 32, de préférence au moyen d'un vérin rotatif 34, notamment du type à air comprimé. La rotation de l'embase 22 permet de présenter sélectivement le fil 28,30 de l'un ou l'autre des archers 24,26 au contact de la ligne de bavure B1,B2 correspondante, comme cela est représenté sur les figures 1 et 2.

On notera que lorsqu'un archer 24,26 est en position de raclage d'une ligne de bavure B1,B2 correspondante, le fil d'ébavurage 28,30 porté par cet archer est sensiblement aligné avec l'axe X de rotation du poignet 16.

On notera également que le support 32 forme une équerre à 45° reliant le vérin rotatif 34 au poignet 16.

On notera enfin que l'embase 22 de l'outil est solidaire d'un arbre d'entraînement 36 du vérin 34 d'axe formant un angle de 45° avec l'axe de rotation du poignet 16. L'axe de l'arbre 36 est bien entendu l'axe de roation de l'embase 22

La tasse 14 est ébavurée après un préséchage en sortie du moule de fabrication de manière à abaisser son humidité H par rapport à son poids sec jusqu'à une valeur comprise entre 14 et 18%.

On rappellera que l'humidité H par rapport au poids sec est donnée par la relation suivante :

$$H = \frac{P - P_s}{P_s}$$

dans laquelle P est le poids de la tasse lorsqu'on évalue son humidité et $P_s$ est le poids sec (définitif) de la tasse après un séchage complet à la suite de l'ébavurage.

Pour ébavurer la tasse 14, on applique l'un des fils d'ébavurage 28,30 au contact de la ligne de bavure B1,B2 correspondante, sensiblement transversalement à cette ligne de bavure, puis on déplace ce fil le long de la ligne de bavure, sensiblement tangentiellement à la surface de la tasse.

Lors de l'ébavurage de la tasse, si, contrairement à ce qui est recommandé, l'humidité H de la tasse est inférieure à 14%, il peut se produire un phénomène de broutement des fils 28,30 au contact de la surface de la tasse, et si l'humidité H de la tasse est supérieure à 18%, les fils 28,30 peuvent entamer la surface de la tasse.

Le déplacement du fil 28,30 le long de la ligne de bavure B1,B2 est réalisé par le robot 10, après apprentissage du mouvement requis. L'apprentissage du robot prend en compte également le pilotage du vérin rotatif 34 de manière à présenter au contact de la tasse, tantôt le fil 28 porté par l'archer 24, afin d'ébavurer la ligne B1 extérieure au corps 18 et à l'anse 20 (voir figure 1), et tantôt le fil 30 porté par l'archer 26, afin d'ébavurer la ligne B2 intérieure à l'anse 20 (voir figure 2). On notera que l'archer 26 a une forme adaptée pour pénétrer à l'intérieur de l'anse 20.

Le changement d'archer 24,26 se fait par rotation d'un demi-tour de l'embase 22.

Les fils métalliques 28,30 permettent d'exercer la pression nécessaire pour le raclage des lignes de bavures B1,B2 sans entamer la surface de la tasse après enlèvement de la bavure. Les fils 28,30 étant lisses, ils n'ont pas d'effet abrasif sur les zones de la surface de la tasse s'étendant de part et d'autre des lignes de bavures. On évite ainsi, lors de l'ébavurage, l'aplanissage du galbe de la tasse et l'arrondissage des angles de raccordement de l'anse avec le corps de la tasse.

L'invention ne se limite pas au mode de réalisation décrit ci-dessus.

En particulier, le procédé d'ébavurage selon l'invention peut s'appliquer à tout objet moulé creux ou non, comportant au moins une ligne de bavure résultant de son moulage. La matière de l'objet peut être toute matière organique ou minérale non métallique.

Par ailleurs, l'outil selon l'invention peut comporter un seul ou plus de deux archers munis d'un fil d'ébavurage.

Parmi les avantages de l'invention, on notera les suivants.

Le procédé d'ébavurage selon l'invention permet d'obtenir une excellente finition de l'objet ébavuré, en particulier, en autorisant l'ébavurage des angles de la ligne de bavure sans arrondir ces angles.

Par ailleurs, on observe que le procédé selon l'invention permet de rattraper efficacement un décalage des plans de joint d'un objet moulé qui définissent la ligne de bavure de cet objet.

## Revendications

1. Procédé d'ébavurage d'un objet moulé (14) en matière organique ou minérale non métallique, l'objet comprenant au moins une ligne de bavure (B1, B2) résultant de son moulage, **caractérisé en ce que** l'on racle la ligne de bavure au moyen d'un fil métallique rectiligne (28, 30), lisse et tendu sur au moins un archet (24,26), ce fil étant dépourvu de moyens abrasifs ou tranchants pour ne pas produire d'effet abrasif sur les zones de la surface de l'objet s'étendant de part et d'autre de la ligne de bavure (B1, B2), et ce fil étant appliqué au contact de la ligne de bavure (B1, B2) sensiblement transversalement à celle-ci, le fil (28, 30) étant déplacé le long de la ligne de bavure sensiblement tangentiellement à la surface de l'objet.

2. Procédé selon la revendication 1, **caractérisé en ce que** la ligne de bavure (B1, B2) s'étend dans un plan, notamment un plan de symétrie de l'objet.

3. Procédé selon la revendication 2, **caractérisé en ce que** l'objet (14) est muni d'une anse de préhension (20) et comporte deux lignes de bavures (B1, B2) s'étendant dans un même plan, le long des surfaces extérieure et intérieure de l'anse (20).

4. Application du procédé selon l'une quelconque des revendications 1 à 3 à un objet en céramique, notamment un objet creux tel qu'une tasse (14).

5. Procédé selon l'une quelconque des revendications 1 à 3, pris dans son application selon la revendication 4, **caractérisé en ce que**, au moment du raclage de la ligne de bavure, l'objet présente une humidité (H) par rapport au poids sec comprise entre 14 et 18 %.

6. Outil d'ébavurage pour la mise en oeuvre du procédé selon l'une quelconque des revendications 1 à 3 ou 5, **caractérisé en ce qu'**il comprend une embase (22) portant au moins un archet (24, 26) sur lequel est tendu le fil d'ébavurage (28, 30), ledit fil constituant un fil métallique rectiligne, lisse et tendu, ce fil étant dépourvu de moyens abrasifs ou tranchants.

7. Outil selon la revendication 6, pour la mise en oeuvre du procédé selon la revendication 3, **caractérisé en ce que** l'embase (22) porte deux archets (24, 26) sur lesquels sont tendus des fils d'ébavurage (28, 30) respectifs, ces archets (24, 26) étant adaptés pour le raclage des lignes de bavures extérieure (B1) et intérieure (B2) respectivement, l'embase (22) étant montée rotative sur un support (32) afin de pouvoir présenter sélectivement le fil (28, 30) de l'un ou l'autre des archets au contact de la ligne de bavure (B1,B2) correspondante.

8. Outil selon la revendication 7, **caractérisé en ce que** l'embase (22) est reliée au support (32) par un vérin rotatif (34), par exemple du type à air comprimé.

9. Robot du type comprenant un poignet rotatif (16) portant un outil, **caractérisé en ce qu'**il comprend un outil (12) selon l'une quelconque des revendications 6 à 8.

10. Robot selon la revendication 9, **caractérisé en ce**

**que**, lorsque l'archet est en position de raclage de la ligne de bavure (B1, B2), le fil (28, 30) porté par cet archet est sensiblement aligné avec l'axe (X) de rotation du poignet (16).

## Patentansprüche

1. Verfahren zum Entgraten eines aus organischem oder mineralischem, nicht metallischem Werkstoff gegossenen Gegenstandes (14), wobei der Gegenstand mindestens eine Gratkante (B1, B2) aufweist, welche durch seinen Gießvorgang entstanden ist, **dadurch gekennzeichnet, dass** die Gratkante mittels eines metallischen geradlinigen Drahtes (28, 30) abgetragen wird, wobei der Draht mit mindestens einem Bügel (24, 26) glatt und gespannt gehalten wird, und dieser Draht ohne Mittel zum Schleifen oder zum Schneiden ausgebildet ist, um keine Schleifspuren auf den Bereichen der Oberfläche des Gegenstandes zu erzeugen, welche sich beiderseits der Gratkante (B1, B2) erstrecken, und wobei dieser Draht in Berührung mit der Gratkante (B1, B2) im Wesentlichen quer zu dieser zur Anwendung kommt, und wobei die Verschiebung des Drahtes relativ längs der Gratkante im Wesentlichen tangential zur Oberfläche des Gegenstandes erfolgt.

2. Verfahren nach Anspruch 1, **dadurch gekennzeichnet, dass** sich die Gratkante (B1, B2) in einer Ebene, insbesonders in einer Symmetrieebene des Gegenstandes erstreckt.

3. Verfahren nach Anspruch 2, **dadurch gekennzeichnet, dass** der Gegenstand (14) mit einem Henkel (20) zum Anfassen versehen ist und zwei Gratkanten (B1 B2) beinhaltet, welche in einer gemeinsamen Ebene entlang der äußeren und inneren Oberfläche des Henkels (20) verlaufen.

4. Anwendung des Verfahrens nach einem der Ansprüche 1 bis 3 an einem keramischen Gegenstand, insbesondere an einem hohlen Gegenstand wie einer Tasse (14).

5. Verfahren nach einem der Ansprüche 1 bis 3, ausgeführt in seiner Anwendung nach Anspruch 4, **dadurch gekennzeichnet, dass** während des Verlaufes des Abtragens der Gratkante der Gegenstand eine Feuchtigkeit (H) zwischen 14 und 18 % in Bezug auf sein Trockengewicht aufweist.

6. Entgratwerkzeug zur Ausführung des Verfahrens nach einem der Ansprüche 1 bis 3 oder 5, **dadurch gekennzeichnet, dass** es eine Fußplatte (22) umfasst, welche mindestens einen Bügel (24, 26) trägt, auf welchem der Draht (28, 30) zum Entgraten aufgespannt ist, wobei der Draht aus einem metallischen, geradlinigen Draht gebildet ist, welcher glatt und gespannt ist, und wobei der Draht frei von Mitteln zum Schleifen oder zum Schneiden ausgebildet ist.

**7.** Entgratwerkzeug nach Anspruch 6, zur Ausführung des Verfahrens nach Anspruch 3, **dadurch gekennzeichnet, dass** die Fußplatte (22) zwei Bügel (24, 26) trägt, auf welchen jeweils die Drähte (28, 30) zum Entgraten aufgespannt sind, wobei diese Bügel (24, 26) für das Abtragen jeweils der äußeren Gratkanten (B1) und der inneren Gratkanten (B2) ausgebildet sind, und wobei die Fußplatte (22) drehbar auf einem Tragelement (32) montiert ist, um den ausgewählten Draht (28, 30) des einen oder des anderen Bügels in Berührung mit der entsprechenden Gratkante (B1, B2) zu bringren.

**8.** Entgratwerkzeug nach Anspruch 7, **dadurch gekennzeichnet, dass** die Fußplatte (22) mit dem Tragelement (32) über einen Drehantrieb (34) verbunden ist, welcher beispielsweise ein Druckluftzylinder ist.

**9.** Roboter in einer Ausführung, die einen Drehkopf (16) aufweist, welcher ein Entgratwerkzeug tragt, **dadurch gekennzeichnet, dass** es sich um Entgratwerkzeug (12) nach einem der Ansprüche 6 bis 8 handelt.

**10.** Roboter nach Anspruch 9, **dadurch gekennzeichnet, dass** der durch diesen Bügel gehaltene Draht (28, 30) im Wesentlichen mit der Rotationsachse (X) des Drehkopfes (16) fluchtet, wenn sich der Bügel in der Stellung zum Abtragen der Gratkante (B1, B2) befindet.

**Claims**

**1.** Process for deburring an item (14) made from a non-metallic organic or mineral material, the item having at least one burr line (B1, B2) resulting from its moulding, **characterised in that** the burr line is scraped by a straight metal wire (28, 30) on at least one bow (24, 26), this wire not having any abrasive or cutting means so as not to produce an abrasive effect on the surface areas of the item extending on either side of the burr line (B1, B2), and by the wire being applied in contact with the burr line (B1, B2) more or less transversely across it, and the relative movement of the wire (28, 30) along the burr line being more or less at a tangent to the surface of the item.

**2.** Process according to Claim 1, **characterised in that** the burr line (B1, B2) extends in a plane, particularly a plane of symmetry of the item.

**3.** Process according to Claim 2, **characterised in that** the item (14) is complete with a gripping lug (20) and has two burr lines (B1, B2) extending in the same plane, along the outer and inner surface of the lug (20).

**4.** Application of the process according to any one of the Claims 1 to 3 to a ceramic item, particularly a hollow item such as a cup (14).

**5.** Process according to any one of the Claims 1 to 3, regarded in respect of its application according to Claim 4, **characterised in that**, at the time of scraping the burr line, the item has a humidity (H) compared with the dry weight is between 14 and 18% inclusive.

**6.** Deburring tool for using the process according to any one of the Claims 1 to 3 or 5, **characterised in that** it comprises a base (22) with at least one bow (24, 26) on which the debarring wire (28, 30) is stretched, the said wire consisting of a smooth, stretched, straight metal wire, this wire having no abrasive or cutting means.

**7.** , Tool according to Claim 6, for using the process according to Claim 3, **characterised in that** the base (22) holds two bows (24, 26) on which the respective deburring wires (28, 30) are stretched, these wires (24, 26) being adapted for scraping respectively the outer and inner burr lines (B1 and B2), the base (22) being mounted to rotate on a support (32) so as to be able to present selectively the wire (28, 30) of either of the bows in contact with the corresponding burr line (B1, B2).

**8.** Tool according to Claim 7, **characterised in that** the base (22) is connected to the support (32) by a rotary cylinder (34), for example of the compressed air type.

**9.** Robot of the type comprising a rotary cuff (16) holding a tool, **characterised in that** it comprises a tool (12) according to any of the Claims 6 to 8.

**10.** Robot according to Claim 9, **characterised in that**, when the bow is in position for scraping the burr line (B1, B2), the wire (28, 30) held by this bow is more or less aligned with the axis (X) of rotation of the cuff (16).

FIG.1

EP 0 990 495 B1

FIG.2